# EUROPÄISCHE PATENTSCHRIFT

(11) **EP 2 991 494 B1**
(45) Veröffentlichungstag und Bekanntmachung des Hinweises auf die Patenterteilung: **04.07.2018**
(21) Anmeldenummer: 14724042.8
(22) Anmeldetag: 02.05.2014
(51) Int. Cl.: A22B 5/00

(54) **VERFAHREN ZUR DURCHFÜHRUNG VON ZUMINDEST EINEM BEARBEITUNGSSCHRITT AN EINEM SCHLACHTTIER SOWIE SCHNEIDWERKZEUG**
METHOD FOR CARRYING OUT AT LEAST ONE PROCESSING STEP ON A SLAUGHTERED ANIMAL, AND CUTTING TOOL
PROCÉDÉ DE MISE EN OEUVRE D'AU MOINS UNE ÉTAPE DE DÉCOUPE D'UN ANIMAL D'ABATTOIR ET OUTIL DE COUPE CORRESPONDANT

(30) Priorität: 03.05.2013 DE 102013104585
(43) Veröffentlichungstag der Anmeldung: 09.03.2016
(73) Patentinhaber: BANSS SCHLACHT- UND FÖRDERTECHNIK GMBH, 35216 Biedenkopf (DE)
(72) Erfinder: SCHMIDT, Frank, 35232 Dautphetal (DE)
(74) Vertreter: Stoffregen, Hans-Herbert
(86) Internationale Anmeldenummer: PCT/EP2014/058972
(87) Internationale Veröffentlichungsnummer: WO 2014/177682

(56) Entgegenhaltungen:
- EP-A2- 0 212 579
- WO-A1-93/01725
- WO-A1-2007/122244
- WO-A1-2014/025250
- DE-B3-102004 022 346
- US-A1- 2005 227 601

## Beschreibung

Die Erfindung bezieht sich auf ein Verfahren zum Durchführen von zumindest einem Bearbeitungsschritt in zumindest einer Bearbeitungsstation an einem in einer Schlachtstraße entlang einer Förderbahn hängend geförderten Schlachttier durch Scannen des Schlachttieres, Digitalisieren der Scandaten und Zuführung dieser an eine Steuerung einer Handhabungseinrichtung, wie Roboter, über die der zumindest eine Bearbeitungsschritt durchgeführt wird, wobei in der einen Bearbeitungsstation während des Förderns des Schlachttieres als Bearbeitungsschritte sowohl Beckenknochen des Schlachttieres geöffnet als auch Bauchdecke und Brustbein mittig geöffnet werden unter Verwendung eines Schneidwerkzeugs mit um eine Drehachse rotierendem Schneidmesser, das von einer drehbar um die Drehachse angeordneten Schutzhaube bereichsweise abgedeckt ist, wobei von dem Schneidwerkzeug bezogen auf die Drehachse in radialer Richtung ein Beckenknochenmesser zum Öffnen eines Beckenknochens des Schlachttiers ausgeht, das Beckenknochenmesser in eine erste Stellung gedreht bzw. verschwenkt wird, in der als erster Bearbeitungsschritt der Beckenknochen des Schlachttiers mit dem Beckenknochenmesser geöffnet wird, und wobei das Beckenknochenmesser nach dem Öffnen des Beckenknochens in eine zweite Stellung gedreht bzw. verschwenkt wird, in der als zweiter Bearbeitungsschritt Bauchdecke und Brustbein des Schlachttiers mittig mittels des rotierenden Schneidmessers durchtrennt werden.

Ferner nimmt die Erfindung Bezug auf ein von einer Handhabungseinrichtung, wie Roboter, betätigtes Schneidwerkzeug mit einem um eine Drehachse rotierenden Schneidmesser wie einer Schneidsäge, das von einer um die Drehachse verschwenkbaren und das Schneidmesser bereichsweise abdeckenden Schutzhaube umgeben ist, wobei von der Schutzhaube in radialer Richtung ein Beckenknochenmesser zum Öffnen eines Beckenknochen des Schlachttiers ausgeht, die Schutzhaube mit dem fest montierten Beckenknochenmesser in eine erste Stellung verschwenkbar ist, in der als erster Bearbeitungsschritt der Beckenknochen des Schlachttiers mit dem fest montierten Beckenknochenmesser geöffnet wird, und die Schutzhaube mit dem fest montiertem Beckenknochenmesser nach dem Öffnen des Beckenknochens in eine zweite Stellung dreh- bzw. verschwenkbar ist, in der als zweiter Bearbeitungsschritt Bauchdecke und Brustbein mittig mittels des rotierenden Schneidmessers durchtrennt wird, wobei das Schneidmesser mit der Schutzhaube als Einheit um eine zu der Drehachse beabstandeten zweite Achse schwenkbar ist.

Aus der DE-Z.: Fleischwirtschaft 8/2005, Seiten 25 bis 28, Schmidt, F.: "Roboter toppen Spezialmaschinen", und US 6 623 348 A1 sind gattungsgemäße Verfahren bekannt. Dabei werden Schlachtschweine am Anfang einer Roboterlinie durch eine Messstation geführt, in der durch einen oder mehrere Laserscanner ein Oberflächenprofil des Schlachttierkörpers digitalisiert wird. Mittels eines Roboters (Handhabungseinrichtung) können sodann auf der Basis der digitalisierten Werte Vorderpfoten abgekniffen, Rektum freigeschnitten, Schlossknochen getrennt und Bauchdecke und Brustbein geöffnet werden. Die einzelnen Bearbeitungen erfolgen dabei in getrennten Bearbeitungsstationen. Während der einzelnen Bearbeitungsschritte wird das Schlachttier gefordert, so dass im kontinuierlichen Betrieb, d. h., das vom Roboter geführte Werkzeug fährt synchron zur Transportbewegung des Schlachttierförderers mit, die Arbeiten an dem Schlachttier durchgeführt werden.

Aus der EP 0 594 791 B1 sind ein Verfahren sowie eine Vorrichtung zum Aufschneiden eines Tierkörpers bekannt. Beim Öffnen der Bauchdecke und des Brustbeines werden die Eingeweide von der Bauchwand ferngehalten. Hierzu weist ein Schneidwerkzeug einen relativ zu diesem positionierbaren Dorn auf.

Um beim Schlachten von an den Hinterbeinen aufgehängten Schweinen die Vorderbeine ordnungsgemäß zu positionieren, ist nach der EP 1 182 933 B1 ein Positionierungsmittel mit einem im Wesentlichen festen Positionierungskörper vorgesehen, der zwischen die Vorderbeine des Schlachttieres getrieben wird.

EP0212579 A2 offenbart eine Vorrichtung mit einem rotierenden, wegschwenkbaren Schneidmesse und eine Stichsäge.

Ein Schneidwerkzeug mit rotierendem Messer ist der DE 10 2004 022 346 B2 zu entnehmen. Dabei wird das Schneidmesser von einer Schutzhaube umgeben, die zu dem Schneidmesser drehbar ist. In einer zurückgezogenen Stellung wird das Schneidmesser in das Schlachttier eingeschnitten, um sodann nach erfolgtem Einschnitt die Abdeckung in Richtung des Schlachttieres zu verstellen.

Aus der älteren, jedoch nicht vorveröffentlichten WO 2014/025250 A1 sind ein Verfahren und eine Vorrichtung bekannt, mit denen Beckenknochen durchtrennt und Bauchdecke und Brustbeirn mittig geöffnet werden können. Hierzu werden ein drehendes Schneidmesser sowie ein Beckenknochenmesser verwendet, das von einer das Schneidmesser bereichsweise umgebenden Schutzhaube ausgehen kann.

Der vorliegenden Erfindung liegt die Aufgabe zu Grunde, ein Verfahren und ein Schneidwerkzeug der eingangs genannten Art so weiterzubilden, dass ein qualitativ hochwertiges Öffnen des Beckenknochens eines Schlachttiers ermöglicht wird.

Zur Lösung der Aufgabe wird verfahrensgemäß im Wesentlichen vorgeschlagen, dass das Bearbeiten des Schlachttieres im kontinuierlichen Betrieb durchgeführt wird, d.h., dass das von der Handhabungseinrichtung geführte Schneidwerkzeug synchron zur Transportbewegung des Förderers mitfährt.

Der Beckenknochen bzw. Schlossknochen wird nicht mit einem rotierenden Messer geöffnet, sondern mittels des Beckenknochenmessers, welches um die Drehachse des rotierenden Schneidmessers verdrehbar bzw. verschwenkbar angeordnet ist. Vorzugsweise ist das Beckenknochenmesser fest an der über dem Kreismesser befindlichen Schutzhaube montiert und wird mittels der Schutzhaube um einen Winkel von 180° ≤ α ≤ 140°, vorzugsweise 160° gedreht, so dass das feste Beckenknochenmesser, wie Schlossmesser, in einer ersten Stellung ist, in der der Schlossknochen (Beckenknochen) des Schlachtschweins geöffnet werden kann.

Nach dem Öffnen des Schlossknochens wird die Schutzhaube in eine zweite Stellung zurückgedreht, um mit einem an der Schutzhaube angeordneten Finger hinter die vorgeöffnete Bauchdecke zu fahren und diese und das Brustbein mittig mittels des rotierenden Schneidmessers zu öffnen.

In Weiterbildung der Erfindung ist vorgesehen, dass die Schutzhaube und/oder das Beckenknochenmesser mit Druckzylindern, wie Luftdruckzylindern, verstellt werden können. Unabhängig hiervon ist das Beckenknochenmesser um eine außerhalb des Schneidwerkzeugs verlaufende dritte Achse verschwenkbar.

In Weiterbildung der Erfindung ist das Schneidwerkzeug zusammen mit dem Beckenknochenmesser als Einheit um eine beabstandet zu der Drehachse verlaufende zweite Achse schwenkbar, wodurch die erforderliche Bewegungsfreiheit zum Durchtrennen des Beckenknochens gegeben ist.

Losgelöst hiervon sollte die Schutzhaube bzw. das Beckenknochenmesser bei die Beckenknochen, die Bauchdecke und das Brustbein durchtrennender Stellung aktiv unverstellbar sein, also im Vergleich zum Stand der Technik keine gezielte Bewegung durchführen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden Ausführungsbeispielen.

Es zeigen:
- Fig. 1: eine Prinzipdarstellung einer Bearbeitungsstation,
- Fig. 2: die Bearbeitungsstation nach Fig. 1 in Draufsicht,
- Fig. 3: ein Schneidwerkzeug in einer den Schlossknochen öffnenden Stellung und
- Fig. 4: das Schneidwerkzeug gemäß Fig. 3 in einer Bauchdecke und Brustbein öffnenden Stellung.

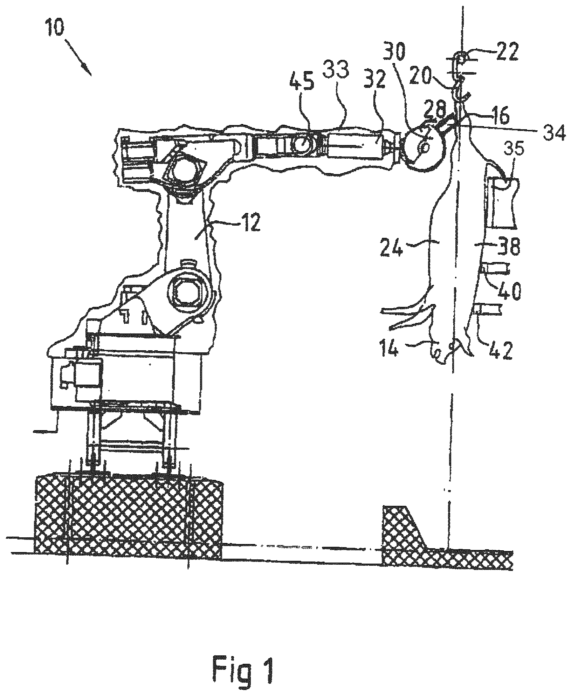

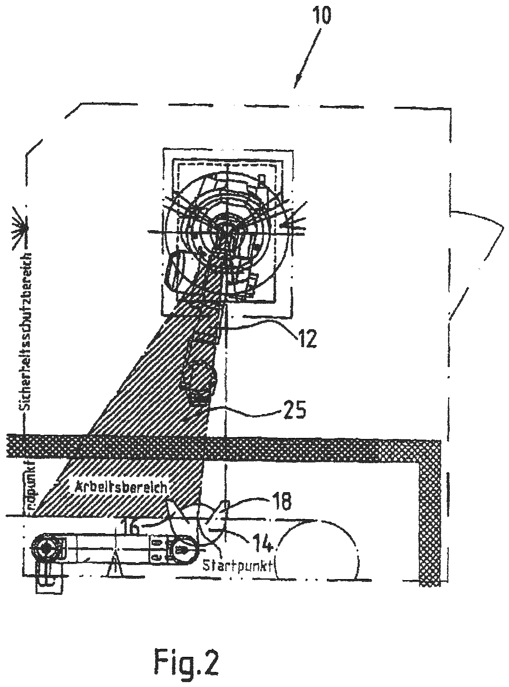

Den Fig. 1 und 2 ist eine Bearbeitungsstation 10 zu entnehmen, in der mittels eines Roboters 12 ein Schlachttier 14 bearbeitet wird. Hierbei handelt es sich beispielhaft um ein an seinen Hinterbeinen 16, 18 hängend transportiertes Schwein. Die Hinterbeine 16, 18 sind mit Haken 20 verbunden, die auf einer Rohrbahn 22 eines insbesondere Stetigförderers verschiebbar angeordnet sind. Andere Förderer kommen selbstverständlich auch in Frage. Insoweit wird auf bekannte Techniken in Schlachtstraßen verwiesen.

Das Schwein 14 ist mit seiner Bauchseite 24 dem Roboter 12 zugewandt, der über digitalisierte Scandaten gesteuert wird, die durch nicht dargestellte, aber aus dem Stand der Technik bekannte Scandaten des Schweins 14 gewonnen werden. Hierzu wird das Schwein an einen oder mehreren Laserscannern vorbeigeführt, mit der zumindest die Bereiche des Schweins 14 gescannt werden, die bearbeitet werden sollen.

In der Bearbeitungsstation 10, und zwar in dem in Fig. 2 schraffierten Arbeitsbereich 25, werden sowohl Schlossknochen als auch Bauchdecke und Brustbein des Schweins 14 geöffnet. Dies erfolgt mittels eines Schneidwerkzeugs mit einem um eine Drehachse 26 rotierenden Schneidmesser 28 wie einer Säge sowie einem von dem Schneidwerkzeug ausgehenden Beckenknochenmesser 34. Das Schneidmesser 28 ist von einer Schutzhaube 30 umgeben, die um die Drehachse 26 verschwenkbar ist. Von der Schutzhaube 30 erstreckt sich in radialer Richtung das fest montierte Beckenknochenmesser 34. Das Schneidmesser 28 mit der Schutzhaube 30 gehen von einem Arm 32 des Roboters 12 aus, um im gewünschten Umfang die Bearbeitung des Schweins14 vornehmen zu können. Der Roboter 12 selbst ist von einer Schutzhülle 33 umgeben, um hygienischen Anforderungen zu genügen.

Die Bearbeitung des Schweins 14 mittels des Roboters 12 erfolgt während des Transports des Schweins 14, also während des Förderns durch den Arbeitsbereich 25. Um eine Positionsveränderung des Schweins 14 während der Bearbeitung und des Transports durch den Arbeitsbereich 25 auszuschließen, wodurch anderenfalls eine unpräzise Bearbeitung des Schweins 14 erfolgen würde, wird dieses auf einer Abstützung 35 mit seiner Rückseite 38 abgestützt. Dabei bewegt sich die Abstützung 35 synchron mit dem Förderer. Im Ausführungsbeispiel handelt es sich bei der Abstützung 35 um ein umlaufendes flächiges Band. Entsprechend der Darstellung in Fig. 1 können mehrere entsprechende Bänder bzw. Abstützungen 35, 40, 42 vorgesehen sein, um das Schwein 14 in zueinander beabstandeten Bereichen abzustützen.

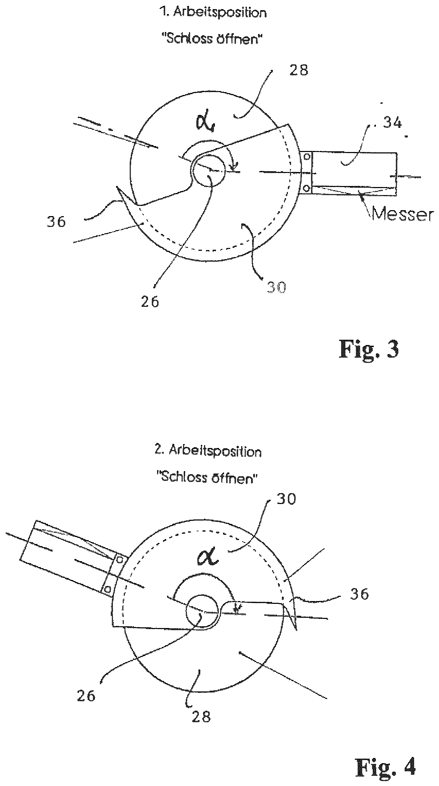

Fig. 3 zeigt das Schneidwerkzeug in einer ersten Stellung, wobei der Schlossknochen des Schweins 14 nicht mit dem rotierenden Schneidmesser 28 geöffnet wird, sondern mit dem an der Schutzhaube 30 fest angeordneten Beckenknochenmesser 34, wobei die über dem rotierenden Schneidmesser 28 um die Achse 26 drehbar angeordnete Schutzhaube 30 mit fest montiertem Beckenknochenmesser 34 um einen Winkel α um nahezu 180° (160°) gedreht ist, so dass das fest montierte Beckenknochenmesser 34 sich in der ersten Arbeitsposition befindet und somit der Schlossknochen (Beckenknochen) des Schweins 14 geöffnet werden kann.

Nach dem Öffnen des Schlossknochens wird die Schutzhaube 30 in eine zweite Stellung zurückgedreht, wie diese in Fig. 4 dargestellt ist, um mit einem an der Schutzhaube 30 angeordneten Finger 36 hinter die vorgeöffnete Bauchdecke zu fahren und diese sowie das Brustbein mittig mittels des rotieren Kreismessers 28 zu öffnen.

Durch Verwendung eines Beckenknochenmessers 34 wird ein qualitativ hochwertiger Schnitt erreicht, da das Beckenknochenmesser 34 beim Öffnen des Beckenknochens den Weg des geringsten Widerstandes wählt, nämlich durch den die Beckenknochen verbindenden Knorpelbereich. Folglich werden hochwertige Fleischbereiche nicht beschädigt.

## Patentansprüche

1. Verfahren zum Durchführen von zumindest einem Bearbeitungsschritt in zumindest einer Bearbeitungsstation (10) an einem in einer Schlachtstraße entlang einer Förderbahn hängend geförderten Schlachttier (14) durch Scannen des Schlachttieres, Digitalisieren der Scandaten und Zuführen dieser an eine Steuerung einer Handhabungseinrichtung wie Roboter (12), über die der zumindest eine Bearbeitungsschritt durchgeführt wird, wobei in der einen Bearbeitungsstation (10) während des Förderns des Schlachttieres (14) als Bearbeitungsschritte sowohl Beckenknochen des Schlachttieres geöffnet als auch Bauchdecke und Brustbein mittig geöffnet werden unter Verwendung eines Schneidwerkzeugs mit um eine Drehachse (26) rotierendem Schneidmesser (28), das von einer drehbar um die Drehachse angeordneten Schutzhaube (30) bereichsweise abgedeckt ist, wobei von dem Schneidwerkzeug bezogen auf die Drehachse (26) in radialer Richtung ein Beckenknochenmesser (34) zum Öffnen eines Beckenknochens des Schlachttiers ausgeht, dass das Beckenknochenmesser (34) in eine erste Stellung gedreht bzw. verschwenkt wird, in der als erster Bearbeitungsschritt der Beckenknochen des Schlachttiers mit dem Beckenknochenmesser (34) geöffnet wird, und wobei das Beckenknochenmesser (34) nach dem Öffnen des Beckenknochens in eine zweite Stellung gedreht bzw. verschwenkt wird, in der als zweiter Bearbeitungsschritt Bauchdecke und Brustbein des Schlachttiers mittig mittels des rotierenden Schneidmessers durchtrennt werden,
**dadurch gekennzeichnet,**
**dass** das Bearbeiten des Schlachttieres (14) im kontinuierlichen Betrieb durchgeführt wird, d.h., dass das von der Handhabungseinrichtung geführte Schneidwerkzeug synchron zur Transportbewegung des Förderers mitfährt.

2. Verfahren nach Anspruch 1,
**dadurch gekennzeichnet,**
**dass** von der Schutzhaube (30) in radialer Richtung das Beckenknochenmesser (34) zum Öffnen eines Beckenknochens des Schlachttiers ausgeht, dass die Schutzhaube mit fest montiertem Beckenknochenmesser (34) in die erste Stellung gedreht bzw. verschwenkt wird, in der als der erste Bearbeitungsschritt der Beckenknochen des Schlachttiers mit dem fest montierten Beckenknochenmesser (34) geöffnet wird, und dass die Schutzhaube (30) mit dem fest montierten Beckenknochenmesser (34) nach dem Öffnen des Beckenknochens in die zweite Stellung gedreht bzw. verschwenkt wird, in der als der zweite Bearbeitungsschritt die Bauchdecke und das Brustbein des Schlachttiers mittig mittels des rotierenden Schneidmessers (28) durchtrennt werden.

3. Verfahren nach Anspruch 2,
**dadurch gekennzeichnet,**
**dass** in der zweiten Stellung ein an der Schutzhaube angeordneter Finger hinter die vorgeöffnete Bauchdecke eingefahren wird, um die Bauchdecke und das Brustbein mittig mittels des rotierenden Kreismessers zu öffnen.

4. Verfahren nach Anspruch 1 oder 2,
**dadurch gekennzeichnet,**
**dass** das Schneidmesser (28) mit der Schutzhaube (30) als Einheit um eine zweite Achse (45) gedreht bzw. verschwenkt wird.

5. Verfahren nach zumindest einem der vorhergehenden Ansprüche,
**dadurch gekennzeichnet,**
**dass** die Abdeckung (30) und /oder das Beckenknochenmesser (34) jeweils mittels eines Druckzylinders (50, 52), wie Pneumatikzylinder, verstellt wird.

6. Von einer Handhabungseinrichtung (12) betätigtes Schneidwerkzeug mit einem um eine Drehachse (26) rotierenden Schneidmesser (28) wie einer Schneidsäge, das von einer um die Drehachse verschwenkbaren und das Schneidmesser bereichsweise abdeckenden Schutzhaube (30) umgeben ist, wobei von der Schutzhaube (30) in radialer Richtung ein Beckenknochenmesser (34) zum Öffnen eines Beckenknochen des Schlachttiers ausgeht, die Schutzhaube (30) mit dem fest montierten Beckenknochenmesser in eine erste Stellung verschwenkbar ist, in der als erster Bearbeitungsschritt der Beckenknochen des Schlachttiers mit dem fest montierten Beckenknochenmesser (34) geöffnet wird, und die Schutzhaube (30) mit dem fest montierten Beckenknochenmesser (34) nach dem Öffnen des Beckenknochens in eine zweite Stellung dreh- bzw. verschwenkbar ist, in der als zweiter Bearbeitungsschritt Bauchdecke und Brustbein mittig mittels des rotierenden Schneidmessers (28) durchtrennt wird, wobei das Schneidmesser mit der Schutzhaube als Einheit um eine zu der Drehachse (26) beabstandeten zweite Achse (45) schwenkbar ist,
**dadurch gekennzeichnet,**
**dass** das Verstellen der Schutzhaube (30) mittels Druckzylinder erfolgt.

7. Schneidwerkzeug nach Anspruch 6,
**dadurch gekennzeichnet,**
**dass** die Schutzhaube (30) das Schneidmesser (28) in einem Umfangswinkel von etwa 180° umschließt, wobei das Beckenknochenmesser (34) in radialer Richtung in einem Winkel von 140° ≤ α ≤ 180°, vorzugsweise α = 160°, in Bezug zu einem schnittöffnungsseitigen Rand der Schutzhaube (30) angeordnet ist.

8. Schneidwerkzeug nach Anspruch 6 oder 7,
**dadurch gekennzeichnet,**
**dass** die Schutzhaube (30) einen hinter die vorgeöffnete Bauchdecke einfahrbaren Finger (36) aufweist.

9. Schneidwerkzeug nach zumindest einem der Ansprüche 6 - 8,
**dadurch gekennzeichnet,**
**dass** Seitenwandungen der Schutzhaube (30) zur Bildung des umfangsseitigen Fingers Aussparungen aufweisen.

10. Schneidwerkzeug nach zumindest einem der Ansprüche 6 - 9,
**dadurch gekennzeichnet,**
**dass** das Schneidwerkzeug zusammen mit dem Beckenknochenmesser (34) als Einheit um eine beabstandet und vorzugsweise parallel zu der Drehachse (26) verlaufende zweite Achse (45) schwenkbar ist.

11. Schneidwerkzeug nach Anspruch 6,
**dadurch gekennzeichnet,**
**dass** das Verstellen der Schutzhaube (30) mittels eines Pneumatikzylinders erfolgt.

## Claims

1. A method for performing at least one processing step in at least one processing station (10) on an animal carcass (14) conveyed suspended along a conveying path in a slaughter line by scanning the animal carcass, digitising the scan data and supplying said data to a controller of a handling apparatus such as a robot (12) by means of which the at least one processing step is performed, the processing steps performed in the one processing station (10) during conveying of the animal carcass (14) including both opening the pelvic bone of the animal carcass and opening the abdominal wall and breastbone centrally using a cutting tool with a cutting blade (28) rotating about an axis of rotation (26) and covered in places by a protective cover (30) arranged so as to be rotatable about the axis of rotation, a pelvic bone blade (34) for opening a pelvic bone of the animal carcass extending from the cutting tool radially relative to the axis of rotation (26), the pelvic bone blade (34) being rotated or swivelled into a first position in which, as first processing step, the pelvic bone of the animal carcass is opened with the pelvic bone blade (34), and the pelvic bone blade (34) being rotated or swivelled into a second position once the pelvic bone has been opened, in which second position, as second processing step, the abdominal wall and breastbone of the animal carcass are severed centrally using the rotating cutting blade,
**characterised in that**
processing of the animal carcass (14) is performed in continuous operation, i.e. the cutting tool guided by the handling apparatus travels synchronously with the conveying movement of the conveyor.

2. A method according to claim 1,
**characterized in that**
from the protective hood (30) extends along the radial direction a pelvic-bone knife (34) for opening the pelvic bone of the slaughter animal, **in that** the protective hood with the firmly mounted pelvic-bone knife (34) is rotated or pivoted into a first position, in which as the first processing step, the pelvic bone of the slaughter animal is opened with the firmly mounted pelvic-bone knife (34), and **in that** after the opening of the pelvic bone, the protective hood (30) with the firmly mounted pelvic-bone knife (34) is rotated or pivoted into a second position, in which as the second processing step, the abdominal wall and the sternum of the slaughter animal are severed centrally by means of the rotating cutting blade (28).

3. The method of claim 2,
**characterized in that**
in the second position, a finger arranged on the protective hood is driven behind the pre-opened abdominal wall in order to open the abdominal wall and the sternum in the centre by means of the rotating circular knife.

4. The method of claim 1 or 2,
**characterized in that**
the cutting blade (28) together with the protective hood (30) are rotated or pivoted as a unit about a second axis (45).

5. The method of at least one of the preceding claims,
**characterized in that**
each of the cover (30) and /or the pelvic-bone knife (34) are adjusted by means of a pressure cylinder (50, 52) such as a pneumatic cylinder.

6. A cutting tool actuated by a handling apparatus (12), with a cutting blade (28) such as a cutting saw rotating about an axis of rotation (26), which cutting blade is surrounded by a protective cover (30) swivellable about the axis of rotation and covering the cutting blade in places, a pelvic bone blade (34) for opening a pelvic bone of the animal carcass extending radially from the protective cover (30), the protective cover (30) being swivellable with the fixedly mounted pelvic bone blade into a first position, in which, as first processing step, the pelvic bone of the animal carcass is opened with the fixedly mounted pelvic bone knife (34), and the protective cover (30) with the fixedly mounted pelvic bone blade (34) being rotatable or swivellable into a second position once the pelvic bone has been opened, in which second position, as second processing step, the abdominal wall and breastbone are severed centrally using the rotating cutting blade (28), the cutting blade being swivellable as a unit with the protective cover about a second axis (45) spaced relative to the axis of rotation (26),
**characterised in that,**
adjustment of the protective cover (30) proceeds using pressure cylinders.

7. The cutting tool of claim 6,
**characterized in that**
the protective hood (30) encloses the cutting blade (28) over a circumferential angle of approximately 180, whereby the pelvic-bone knife (34) is arranged along the radial direction at an angle of 140 ≤ α ≤ 180°, preferably α = 160°, in relation to an edge on the side of the cutting opening of the protective hood (30).

8. The cutting tool of claim 6 or 7,
**characterized in that**
the protective hood (30) possesses a finger (36) that can be driven behind the pre-opened abdominal wall.

9. The cutting tool of at least one of claims 6 - 8,
**characterized in that**
side walls of the protective hood (30) possess recesses to form the finger along the edge.

10. The cutting tool of at least one of claims 6 - 9,
**characterized in that**
the cutting tool together with the pelvic-bone knife (34) are rotatable as a unit about a second axis (45), which extends at a distance to and preferably in parallel to the rotational axis (26).

11. The cutting tool according to claim 6,
**characterized in that**
the cover (30) is adjusted by means of a pneumatic cylinder.

## Revendications

1. Procédé pour réaliser au moins une étape de traitement, dans au moins un poste de traitement (10) sur un animal de boucherie (14) transporté suspendu dans une chaîne d'abattage le long d'une voie de convoyage, en scannant l'animal de boucherie, en numérisant les données scannées et en transmettant celles-ci à une commande d'un dispositif de manipulation tel un robot (12) par le biais de laquelle commande ladite au moins une étape de traitement est réalisée, sachant que dans ledit poste de traitement (10) pendant le convoyage de l'animal de boucherie (14), sont ouverts en guise d'étapes de traitement aussi bien l'os du bassin de l'animal de boucherie que la paroi abdominale et le sternum en leur centre en utilisant un outil de coupe avec un couteau de découpe (28) en rotation autour d'un axe de rotation (26), lequel couteau de découpe est recouvert partiellement d'un capot de protection (30) disposé de manière à être pivotable autour de l'axe de rotation, sachant qu'un couteau pour os du bassin (34) servant à ouvrir un os du bassin de l'animal de boucherie part de l'outil de coupe dans le sens radial par rapport à l'axe de rotation (26), que le couteau pour os du bassin (34) est tourné ou basculé dans une première position dans laquelle, en guise de première étape de traitement, l'os du bassin de l'animal de boucherie est ouvert au moyen du couteau pour os du bassin (34) et sachant qu'après l'ouverture de l'os du bassin, le couteau pour os du bassin (34) est tourné ou basculé dans une seconde position dans laquelle, en guise de seconde étape de traitement, la paroi abdominale et le sternum de l'animal de boucherie sont sectionnés en leur centre au moyen du couteau de découpe en rotation,
**caractérisé en ce**
**que** le traitement de l'animal de boucherie (14) est réalisé en exploitation continue, c.-à-d. que l'outil de coupe guidé par le dispositif de manipulation se déplace de manière synchrone au mouvement de transport du convoyeur.

2. Procédé selon la revendication 1,
**caractérisé en ce,**
**que** le couteau pour os du bassin (34) servant à ouvrir un os du bassin de l'animal de boucherie part du capot de protection (30) dans le sens radial, que le capot de protection avec couteau pour os du bassin (34) monté de manière fixe est tourné ou basculé dans la première position dans laquelle, en guise de première étape de travail, l'os du bassin de l'animal de boucherie est ouvert au moyen du couteau pour os du bassin (34) monté de manière fixe et que le capot de protection (30) avec le couteau pour os du bassin (34) monté de manière fixe est tourné ou basculé, après l'ouverture de l'os du bassin, dans la seconde position dans laquelle, en guise de seconde étape de traitement, la paroi abdominale et le sternum de l'animal de boucherie sont sectionnés en leur centre au moyen du couteau de découpe (28) en rotation.

3. Procédé selon la revendication 2,
**caractérisé en ce,**
**que** dans la seconde position, un doigt disposé sur le capot de protection est engagé derrière la paroi abdominale pré-ouverte pour ouvrir la paroi abdominale et le sternum en leur centre au moyen du couteau circulaire en rotation.

4. Procédé selon la revendication 1 ou 2,
**caractérisé en ce**
**que** l'unité formée par le couteau de découpe (28) et le capot de protection (30) est tournée ou basculée autour d'un second axe (45).

5. Procédé selon au moins une des revendications précédentes,
**caractérisé en ce**
**que** le recouvrement (30) et/ou le couteau pour os du bassin (34) sont réglés chacun au moyen d'un vérin (50, 52), tel un vérin pneumatique.

6. Outil de coupe actionné par un dispositif de manipulation (12) avec un couteau de découpe (28), tel qu'une scie de coupe, en rotation autour d'un axe de rotation (26), qui est entouré d'un capot de protection (30) basculable autour de l'axe de rotation et recouvrant partiellement le couteau de coupe, sachant qu'un couteau pour os du bassin (34) servant à ouvrir un os du bassin de l'animal de boucherie part du capot de protection (30) dans le sens radial, que le capot de protection (30) avec le couteau pour os du bassin (34) monté de manière fixe est basculable dans une première position dans laquelle, en guise de première étape de traitement, l'os du bassin de l'animal de boucherie est ouvert au moyen du couteau pour os du bassin (34) monté de manière fixe et que le capot de protection (30) avec le couteau pour os du bassin (34) monté de manière fixe est pivotable ou basculable, après l'ouverture de l'os du bassin, dans une seconde position dans laquelle, en guise de seconde étape de traitement, la paroi abdominale et le sternum de l'animal de boucherie sont sectionnés en leur centre au moyen du couteau de découpe (28) en rotation, sachant que l'unité formée par le couteau de coupe et le capot de protection est basculable autour d'un second axe (45) espacé de l'axe de rotation (26),
**caractérisé en ce**
**que** le réglage du capot de protection (30) a lieu au moyen d'un vérin.

7. Outil de coupe selon la revendication 6,
**caractérisé en ce,**
**que** le capot de protection (30) entoure le couteau de découpe (28) dans un angle circonférentiel de 180° environ, sachant que le couteau pour os du bassin (34) est disposé dans le sens radial dans un angle tel que 140° ≤ a ≤ 180°, de préférence a = 160°, par rapport à un bord du côté de l'ouverture de coupe du capot de protection (30).

8. Procédé selon la revendication 6 ou 7,
**caractérisé en ce**
**que** le capot de protection (30) présente un doigt (36) engageable derrière la paroi abdominale pré-ouverte.

9. Outil de coupe selon au moins une des revendications 6-8,
**caractérisé en ce**
**que** les parois latérales du capot de protection (30) présentent des encoches pour former le doigt côté circonférentiel.

10. Outil de coupe selon au moins une des revendications 6-9,
**caractérisé en ce**
**que** l'unité formée par l'outil de coupe et le couteau pour os du bassin (34) est pivotable autour d'un second axe (45) espacé de l'axe de rotation (26) et de préférence parallèle à celui-ci.

11. Outil de coupe selon la revendication 6,
**caractérisé en ce,**
**que** le réglage du capot de protection (30) a lieu au moyen d'un vérin pneumatique.
